# EUROPEAN PATENT SPECIFICATION

(11) **EP 3 991 518 B1**
(45) Date of publication and mention of the grant of the patent: **30.04.2025**
(21) Application number: 20832481.4
(22) Date of filing: 26.06.2020
(51) Int. Cl.: H05B 6/06, H02J 7/00, H05B 1/02, A47J 27/21

(54) **ENERGY MANAGEMENT SYSTEM AND METHOD FOR A KITCHEN APPLIANCE**
ENERGIEVERWALTUNGSSYSTEM UND VERFAHREN FÜR EIN KÜCHENGERÄT
SYSTÈME DE GESTION D'ÉNERGIE ET SON PROCÉDÉ POUR APPAREIL DE CUISINE

(30) Priority: 28.06.2019 AU 2019902276
(43) Date of publication of application: 04.05.2022
(73) Proprietor: Breville Pty Limited, Alexandria, New South Wales 2015 (AU)
(72) Inventor: PSAROLOGOS, Con, Alexandria, New South Wales 2015 (AU); MACHEN, Daniel Philip, Alexandria, New South Wales 2015 (AU); REN, Xiang, Alexandria, New South Wales 2015 (AU); TOFAILI, Ali, Alexandria, New South Wales 2015 (AU); FRYER, Scott, Alexandria, New South Wales 2015 (AU)
(74) Representative: Inchingalo, Simona
(86) International application number: PCT/AU2020/050648
(87) International publication number: WO 2020/257860

(56) References cited:
- WO-A1-2019/051529
- WO-A1-2019/090381
- JP-A- 2002 360 426
- JP-A- 2012 244 780
- US-A1- 2010 039 071
- US-A1- 2016 365 741
- US-A1- 2018 166 892

## Description

### Technical Field

The present invention relates generally to an energy management system and method for a kitchen appliance. The present invention also relates to a computer program product including a computer readable medium having recorded thereon a computer program for controlling an energy management system for a kitchen appliance.

### Background

Kitchen appliances may use a combination of mains power and backup power in order to power various functions of the kitchen appliance, usually applying both the mains power and the backup power to operate one or more functions of the kitchen appliance.

At times, depending on which country or location the appliance is being used, the power available via the main domestic power supply, or indeed any other provided power supply, may not be sufficient to operate one or more desired functions in what is considered to be a reasonable amount of time.

For example, in the U.S.A., the domestic mains power supply provides a power source with a maximum power output of 1800 Watts. Whereas, in Australia, the maximum power output from the domestic mains power supply is 2400 Watts. Therefore, in the U.S.A. a kettle, for example, may take a certain amount of time to boil water, or at least heat the water to a desired temperature, whereas in Australia, the same kettle may take less time to boil the water or heat the water to the desired temperature. Where a domestic mains power supply is provided having a maximum power output of 3000 Watts, the time to boil the water or reach the desired temperature may be reduced even further.

At times, kitchen appliances may have the mains supply switched off, either manually, accidentally or by way of a power cut for example. This loss of mains power can result in the kitchen appliance being left in an unsafe or non-preferred mode of non-operation that can result in damaged food preparation or damage to the kitchen appliance. A method for controlling a battery capacity of a secondary battery and a respective battery-driven household electrical appliance are disclosed in document US 2016/0365741.

### Summary

It is an object of the present invention to substantially overcome, or at least ameliorate, one or more disadvantages of existing arrangements.

Disclosed are arrangements which seek to address the above problems by providing an improved energy management system and method for kitchen appliances.

For example, a determination of a loss of mains supply may result in activating one or more functions of the kitchen appliance using a backup power supply in order to put the kitchen appliance in a safer or more preferable state of operation.

As a further example, an energy management system may provide an improved monitoring system that monitors the state of health and/or the state of charge of a backup power supply to determine how best to utilise the power that is available from a mains power supply and a backup power supply.

As another example, an energy management system may provide an improved charging system for a removeable power source, such as a battery for example, to enable the removeable power source to be charged by one kitchen appliance (e.g. when that kitchen appliance is plugged in and not in use) in readiness for the removeable power source to be removed and used by another kitchen appliance when the other kitchen appliance requires additional power that is not readily available from the main power source.

According to a first aspect of the present disclosure, there is provided an energy management system for a kitchen appliance, the energy management system comprising: a mains power system, a backup energy storage system, and at least one controller, wherein the controller is arranged to: determine a state of health of the energy storage system; determine a state of charge of the energy storage system; determine how energy from the energy storage system is to be used based on the determined state of health, the determined state of charge and at least one measured variable obtained from a kitchen appliance, and apply the energy to operate at least one function of the kitchen appliance.

The energy management system may have a controller arranged to determine one or more of the following, in any combination, i) whether to use the energy from the energy storage system or not, ii) how much energy to use from the energy storage system, iii) how long to use the energy storage system for, and iv) which of the at least one function of the kitchen appliance can be performed using energy from the energy storage system.

The energy management system may have a controller further arranged to determine a discharge power limit of the energy storage system based on the determined state of charge and determine how energy from the energy storage device is to be used based on the determined state of health, the determined discharge power limit and the least one measured variable obtained from the kitchen appliance.

The energy management system may have a controller further arranged to determine how many power cycles there are based on the determined discharge power limit, and indicate the determined number of power cycles.

The energy management system may have an energy storage system that has at least one battery, where the controller is further arranged to determine the state of charge based on a measured battery current and an estimated open circuit battery voltage.

The energy management system may have an energy storage system that has at least one battery, and the controller is further arranged to determine the estimated open circuit battery voltage based on the battery temperature and the battery voltage.

The energy management system may have an energy storage system that has at least one battery, and the controller is further arranged to determine the state of health based on the internal resistance of the battery, the operating temperature of the battery and the lifetime capacity of the battery.

The energy management system may have an energy storage system that has at least one battery, where the controller is an energy storage system controller arranged to determine how the energy from the battery is to be used based on the determined state of health, a determined state of charge and at least one function being or to be performed by the kitchen appliance.

The energy management system may have the energy storage system controller and the battery in a self-contained unit, where the self-contained unit is removably attached to the kitchen appliance.

The energy management system may have an energy storage system that has one or more of a capacitor, a capacitor bank, a super capacitor, a super capacitor bank, or a battery.

Also provided is a kitchen appliance that has an energy management system as described herein.

Also provided is a computer readable medium having recorded thereon a computer program for controlling an energy management system for a kitchen appliance as described herein.

Other aspects are also disclosed.

### Brief Description of the Drawings

At least one embodiment of the present invention will now be described with reference to the drawings, in which:
Fig. 1A shows an example of a boil cycle for a kettle using a mains power supply and a backup battery power supply;
Fig. 1B shows a further example of a boil cycle for a kettle using a mains power supply and a backup battery power supply;
Fig. 2 shows a kitchen appliance, in the form of a kettle, in accordance with the present disclosure;
Fig. 3 shows a backup power supply, in the form of a removable battery, in accordance with the present disclosure;
Fig. 4 shows a schematic block diagram representation of an energy management system upon which the herein described processes can be implemented according to the present disclosure; and
Figs. 5A and 5B show a process flow diagram for implementation on one or more kitchen appliances according to the present disclosure.

### Detailed Description including Best Mode

Where reference is made in any one or more of the accompanying drawings to steps and/or features, which have the same reference numerals, those steps and/or features have for the purposes of this description the same function(s) or operation(s), unless the contrary intention appears.

The following processes and systems may apply to various different types of kitchen appliance, including for example, a kettle, a pizza oven, a stick blender, a food processing device, a coffee machine, a toaster, a sandwich maker etc.

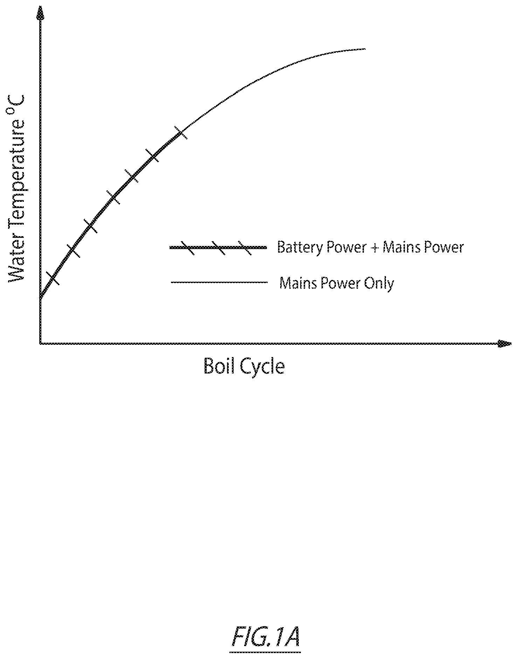

Fig. 1A shows an example of a boil cycle for a kettle using a mains power supply and a backup battery power supply, where the time is indicated on the x-axis and the water temperature is indicated on the y-axis. In this example, it can be seen that the initial heating cycle of heating water applies power to the heating elements from battery power and mains power. For example, the kettle may have a first heating element that uses mains power and a second heating element that uses battery power. That is, the first heating track may be an AC heating track, and the second heating track may be a DC heating track. The combination of applying two different sources of power to different heating tracks enables the kettle to heat the water up faster than just using mains power. This advantage is more pronounced in regions in which lower power mains supply is provided.

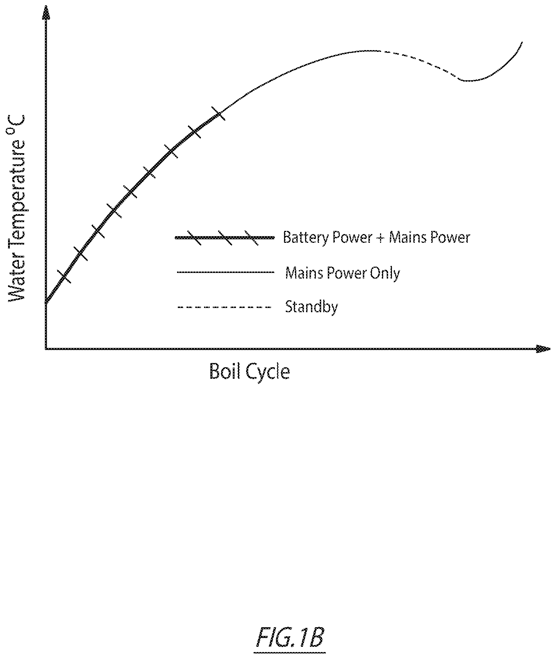

Fig. 1B shows another example of a boil cycle for a kettle using a mains power supply and a backup battery power supply, where the time is indicated on the x-axis and the water temperature is indicated on the y-axis. In this example, a top up boil cycle is applied by the user after a standby period. During the top up boil cycle, the controller of the kettle only applies mains power because the water us already substantially at the required temperature and it is preferable to save the battery power for a time when it is more usefully used, such as during the initial heating cycle.

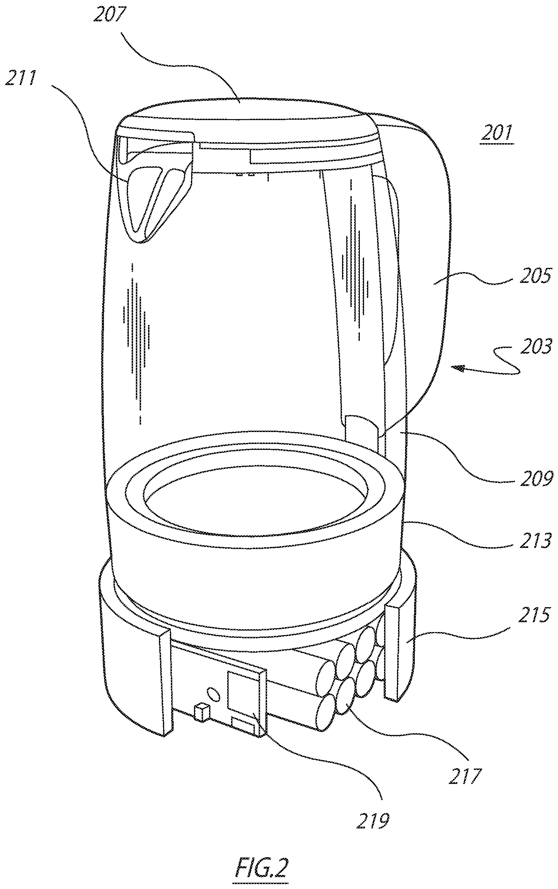

Fig. 2 shows a kitchen appliance, in the form of a kettle 201.

The kettle 201 has a main body 203 with a handle 205, a lid 207 and a vessel 209. Liquid (e.g. water) is poured into the vessel 209 via the lid 207 and poured out of the vessel 209 via the spout 211. In the base 213 is a heating element (not shown) for heating the liquid. Underneath the base 213 is a backup power unit 215 in which are located a backup power source 217, which in this example is a battery pack, and a control board 219 with various electronic components fitted thereon.

The heating element has multiple elements, where at least one element is powered using mains power and at least one other element is powered using the backup power source.

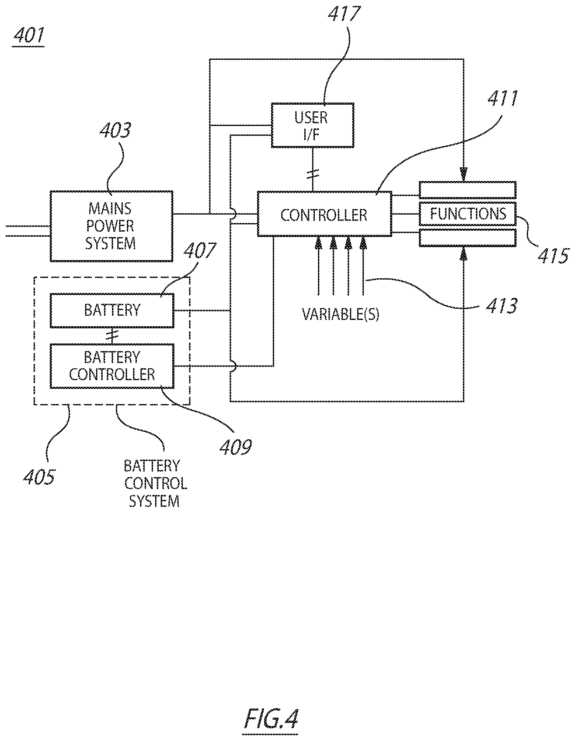

The control board in this example is a battery controller, where the battery controller and battery pack form a battery control system (as shown in Figure 4. It will be understood that other components are also fitted on the control board such as a memory, resistors, capacitors, switches, connectors and interconnecting tracks to enable the control board to operate. The controller also has access to a set of instructions that are either stored within the controller or in a connected memory. The controller is configured to read the set of instructions to control the operation of the battery as well as to send and receive signals to and from an external main controller that is arranged to control operation of the kettle 201. Therefore, there is provided a computer program product including a computer readable medium having recorded thereon a computer program for controlling the herein described energy management system.

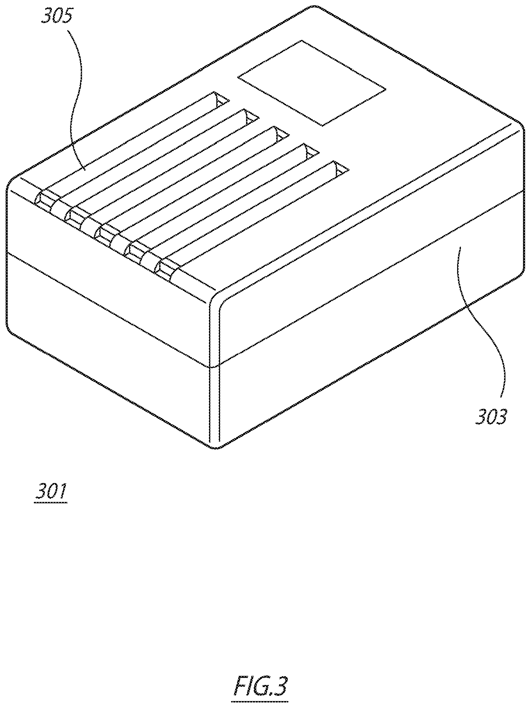

Fig. 3 shows a backup power supply, in the form of a removable battery 301. The backup power supply has a casing 303 in which a battery pack (not shown) is located.

In this example, the removable battery 301 has connectors 305 that enable the battery to be connected to corresponding connectors (not shown) on a backup power unit of a kitchen appliance (such as a kettle for example). This removable battery therefore negates the need to have a stationary battery pack located in the backup power unit (as shown in Figure 2), although a stationary battery pack may be used in addition to the removable battery.

The removable battery pack may be charged on one kitchen appliance and used on that same kitchen appliance or on an alternative kitchen appliance. The battery pack may also be used on different types of kitchen appliance if that appliance has a corresponding connector to connect to the battery pack.

Fig. 4 shows a schematic block diagram representation of an energy management system upon which the herein described processes can be implemented.

The energy management system 401 is suitable for any type of kitchen appliance. The energy management system 401 has a mains power system 403 that is connected to a mains outlet. A backup energy storage subsystem (e.g. battery control subsystem) 405 includes a backup energy store 407 (e.g. a battery) and optionally a backup energy controller 409. The controller 411 receives one or more inputs 413 from various sensors of the kitchen appliance, such as, for example, temperature sensors, water levels etc. The controller 411 is used to control one or more functions 415 of the kitchen appliance.

The controller 411 is connected to a user interface 417 that enables a user to control the one or more functions 415 of the kitchen appliance.

The energy management system 401 has a main controller 411, wherein the controller 411, in one example, is arranged to (by virtue of software instructions) determine a state of health of the energy storage system 407, determine a state of charge of the energy storage system 407, determine how energy from the energy storage system 407 is to be used based on the determined state of health, the determined state of charge and at least one measured variable 413 obtained from the kitchen appliance, and apply the energy to operate at least one function 415 of the kitchen appliance.

According to another example, the backup energy controller 409, is arranged to (by virtue of software instructions) determine a state of health of the energy storage system 407, determine a state of charge of the energy storage system 407, determine how energy from the energy storage system 407 is to be used based on the determined state of health, the determined state of charge and at least one measured variable 413 obtained from the kitchen appliance, and apply the energy to operate at least one function 415 of the kitchen appliance.

That is, in one example, there is one controller 411 that is used to determine how energy from the energy storage system is to be used. In another example, there is one controller 409 that is used to determine how energy from the energy storage system is to be used, and a further main controller 411 used to control one or more functions of the kitchen appliance.

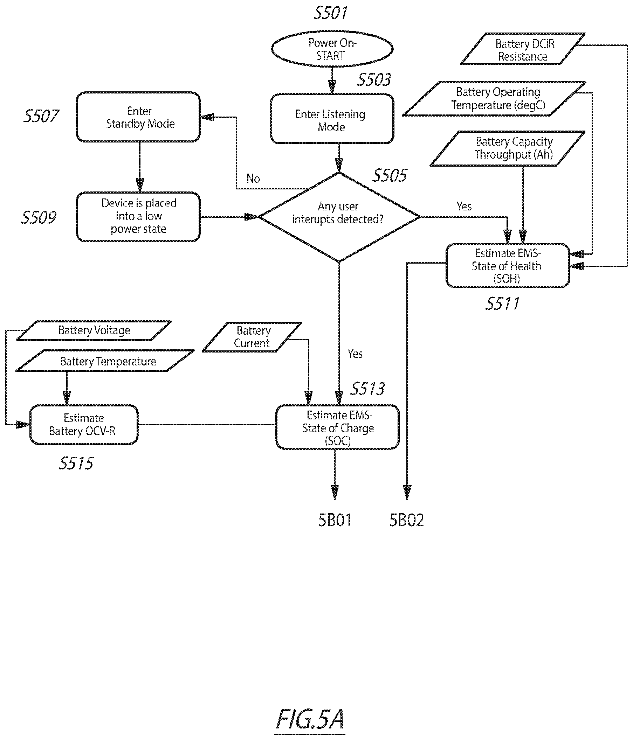

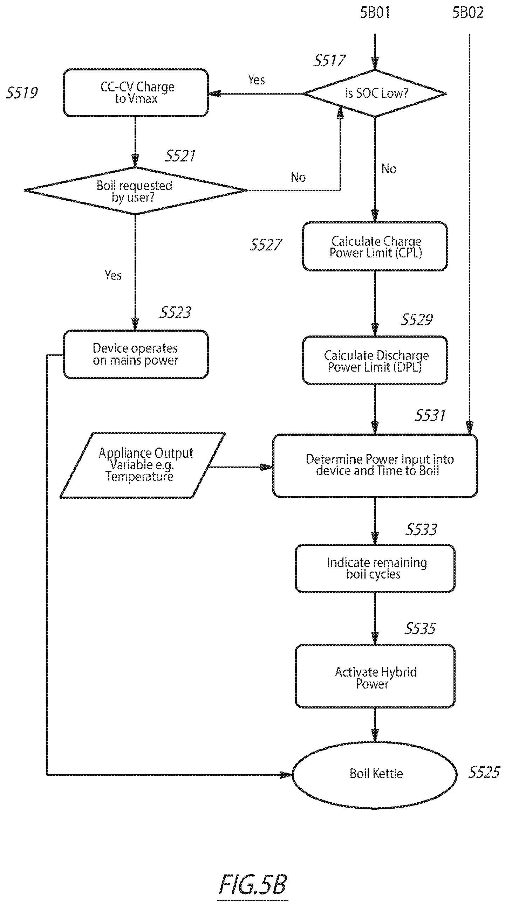

Figs. 5A and 5B show a process flow diagram for implementation on one or more kitchen appliances using the energy management system described herein.

At step S501, the kitchen appliance is switched on by pressing "Start", for example. At step S503, the appliance enters a listening mode to listen for a user command being entered via the user interface of the appliance. At step S505, a determination is made by the controller whether a user interrupt has been detected, and upon a negative determination, the process moves to step S507 where the appliance enters a standby mode. Subsequently, the appliance is placed into a low power state at step S509 and continues to monitor for a user interrupt at step S505.

Upon a positive determination that a user interrupt has been detected at step S505, an estimate of the state of health (SOH) of the backup power source is determined at step S511.

The SOH is determined from at least three inputs i) battery capacity throughput (or lifetime capacity) measured in Ampere Hours (Ah), ii) battery operating temperature measured in degrees Celsius and iii) battery DC internal resistance measured in ohms.

It will be understood that any suitable method for calculating the SOH known to the person skilled in the art may be used depending on the type of backup power source being used.

Although in the above described example for determined SOH the backup power source is a battery or set of batteries, it will be understood that the backup power source may be any other suitable form of backup power source as mentioned herein, and that the SOH of the particular backup power source may be determined using any suitable known method for that type of power source.

The measured state of health is a measurement of the battery's reliability to provide power as it gets older after use.

Also, upon a positive determination that a user interrupt has been detected at step S505, an estimate of the state of charge (SOC) of the backup power source is determined at step S513.

The SOC is determined from at least two inputs i) battery current measured in Amperes (A) and ii) an estimated battery open circuit voltage (OCV-R).

The OCV-R is determined at step S515 based on at least two inputs i) battery temperature measured in degrees Celsius and ii) battery voltage measure in volts (v)

The OCV-R is determined based on the battery specifications provided by the manufacturer of the battery. That is, "state of charge" data is stored in memory and used by the controller to determine the OCV-R.

It will be understood that any suitable method for calculating the SOC known to the person skilled in the art may be used depending on the type of backup power source being used.

For example, the controller may monitor the voltage, current and temperature of the battery, to calculate the SOC.

Although in the above described example for determining the SOC the backup power source is a battery or set of batteries, it will be understood that the backup power source may be any other suitable form of backup power source as mentioned herein, and that the SOC of the particular backup power source may be determined using any suitable known method for that type of power source.

At step S517 the controller determines whether the estimated SOC is lower than a predefined threshold. Upon a positive determination, the process moves to step S519 and the controller starts charging the battery to its maximum charge Vmax using a constant current (CC) and a constant voltage (CV).

For example, in a battery, cells are charged using a predefined constant current, which is selected to optimise the lifetime of the cells and the charge time. When one of the cells in the cell series string reaches its upper voltage limit, the charge mode will automatically switch to constant voltage charge mode. The CV charge mode will hold a constant voltage in order to charge the cells. The cells which are at the upper voltage limit will be passively balanced whilst the lower voltage cells are subsequently charged. As this process progresses, the charging current will be reduced automatically. The CV charge mode will be terminated when the charging current reaches a value which is equal to the capacity of the cells divided by 20, for example. In one example scenario, a series cell string of capacity of 2Ah, charging will be terminated at charging current of less than 0.1A

At step S521, the controller determines whether a user has requested a boiling function to be operated while the battery is being charged to Vmax, and upon a negative determination that a boiling function has been requested (i.e. a boiling function has not been requested) the process returns to step S517 to determine whether the SOC is below a predetermined threshold.

Upon a positive determination at step S521 that a boil request has been made by the user while the battery is being charged to Vmax (i.e. the SOC is below a predetermined threshold), the process moves to step S523 to operate the device function using the mains power only, and subsequently, at step S525, in this example, boils the kettle using the mains power only.

It will be understood that for other kitchen appliances different functions can be performed at step S525. For example, a sous-vides device may operate a water pump and/or heating element, a pizza oven may operate a fan and/or a heating element, etc.

Upon a negative determination at step S517 (i.e. the SOC is at or above a predefined threshold), the process moves to step S527 to calculate the charge power limit (CPL), and step S529 to calculate the discharge power limit (DPL).

The CPL calculation step is an optional step that provides the controller with information on the available power in the battery to manage the voltage and current being used to charge the battery to safely charge the battery and also to assist in prolonging the life of the battery by not overcharging, undercharging, repeat charging etc.

It will be understood that any suitable method for calculating the CPL known to the person skilled in the art may be used depending on the type of backup power source being used. The CPL may be calculated as is known in the art based on one or more of measured parameters taken from the power source, manufacturing parameters of the power source, the load etc.

For example, if the battery is 98% charged, then the charge power limit calculates that only a little bit of current and voltage need to be applied for it to reach 100%. Otherwise it may overcharge, which is detrimental to the battery.

The DPL is used to manage the voltage and current that is to be supplied to the load For a discharge, if there is little charge left, then it will not be beneficial to max out the voltage and current that the load can draw from the battery, as the battery will be drained very quickly.

It will be understood that any suitable method for calculating the DPL known to the person skilled in the art may be used depending on the type of backup power source being used. The DPL may be calculated as is known in the art based on one or more of measured parameters taken from the power source, manufacturing parameters of the power source, the load etc.

The controller uses a minimum of three inputs to determine the power required to boil the kettle and, optionally, the time to boil.

A first input is a variable associated with the kitchen appliance that can be measured and provided as an input to the controller.

A second input is the SOH of the backup power supply (e.g. battery).

A third input is the SOC, and so subsequently the DPL as calculated from the SOC, of the backup power source.

By monitoring these three inputs, the controller is configured to determine one or more (in any combination) of the following: i) whether to use the backup power source or not, ii) how much power to use from the backup power source, iii) how long to use the backup power source for, and iv) which of one or more functions of the kitchen appliance can be performed using the backup power source.

For example, the water temperature sensed by a temperature sensor may be used as a variable input. For example, in one scenario, if there has been a recent boil and the water in the kettle is hot, the controller may determine that, based on the measured water temperature, the SOH of the battery and the DPL (based on the SOC) that the backup battery should not be used to reheat the water is no need to pump more power than needed. State of health is another input and discharge power limit based on the state of charge, the third.

Although the process shown in Figures 5A and 5B may be performed by a single controller on the main circuit board of the kitchen appliance, a separate backup power subsystem may be used to perform the process shown in Figure 5B. That is, this separate subsystem may be incorporated onto a separate circuit board with a separate battery controller all located within a separate detachable/removeable unit that can communicate with the main controller in the kitchen appliance when connected. This separate unit may also receive the required variables and sensed inputs to perform the process shown in Figure 5B.

The separate backup power subsystem may communicate with the controller when the controller is initiating the process shown in Fig 5A, determining the SOH characteristics of the backup power source and determining the DPL (based on the SOC) of the backup power source.

Finally, the system activates hybrid power (battery and mains) to boil the kettle. At step S531, the process determines, for example, the amount of power to be applied to the function of the appliance (e.g. boiling function) based on the DPL, the SOH and a variable measured from the appliance. The process may also in addition determine the time required to perform the function (e.g. time to boil).

The variable may be a sensed variable taken from a sensor reading on the kitchen appliance. For example, the variable may be a temperature measurement (inside or outside the appliance), a temperature measurement of a liquid and/or ingredient in the appliance, a liquid level of liquid in the appliance, a liquid flow rate of liquid in the appliance, a speed or rotation measurement of rotating elements in the appliance or any other variable of a function performed by the appliance that can be measured using any suitable sensor

Optionally, the controller may determine and indicate on the user interface the number of remaining boil cycles at step S533 based on the current battery charge level. This may be determined from the SOC, the SOH, the CPL and the DPL or any suitable combination thereof.

At step S535, the controller initiates the use of the backup power either separate from the mains power, or in addition to the mains power.

At step S525, the kettle is boiled using either the backup power alone, the mains power or a combination of both depending on one or more of the previous determinations made in the process.

According to another example, the herein described system may determine when to use the backup power available from the energy storage system in a kitchen appliance based on the power requirements of one or more functions of the kitchen appliance. For example, the input variable may be a measured temperature of a pizza oven, where the temperature provides an indication of whether the pizza oven meeds to be cooled down or not. The temperature may be measured from any suitable location on, near to or inside the pizza oven. The controller also uses the SOC and DPL with the measured variable to make a determination of whether the backup power supply should be used to operate a function of the pizza oven, i.e. a cooling fan, to cool the pizza oven down in the event of a loss of mains power (e.g. because the mains plug was disconnected from the mains outlet).

According to various implementations, the life of the one or more batteries used in the energy storage system may be extended by limiting the power cycle depth during use.

According to one example, the controller may be arranged to determine whether the user has selected a function that is a "top up boil", that is the water has recently boiled and the appliance is being used to quickly reheat the water within a short period of time. In this scenario, the controller can determine that the temperature of the water is above a defined threshold and so then ensure the kitchen appliance only uses the mains AC power to drive the power loads (heating elements). In this manner, the battery life may be extended by reducing the times the battery is used in short bursts.

A subsystem of the energy management system is a battery management system (BMS). The BMS provides a self-contained modular system that can monitor and assist with controlling operation of the battery. The modular format if the BMS unit enables the unit to be removably attached to other appliances of the same type and different types.

The BMS may have a safety protection circuit that is arranged to monitor and control various factors associated with battery management including, but not limited to, overcharge, undercharge, unsafe or over discharge, charging management, cell balancing, short circuits, pre-charging and over temperature control.

The energy management system described herein can determine whether a hybrid mode should be enabled based on the determination of state of health, state of charge and at least one measurable variable associated with a function of the kitchen appliance. The "hybrid mode" is a mode of operation in which an alternative power source is used, where the alternative power source is a different power source to the mains power source that is controlled by the mains power system.

According to one example, the alternative power source may include a backup power supply, such as an energy storage device that includes a plurality of capacitor banks and has associated with it one or more control switches. According to an alternative example, the energy storage device may include one or more battery storage devices, where the device has associated with it one or more control switches. Therefore, the backup power supply may have an energy storage device that includes a capacitor, a capacitor bank, a super capacitor, a super capacitor bank, or a battery. It will be understood that any suitable form of energy storage may be used for the backup power supply.

According to various implementations, the backup power supply may be removable. For example, the backup power supply can be moved from one device to another device. The same backup power supply can be used on different types of appliance.

With the provision of a backup power supply, such as a battery, that is an alternative to the mains power, the alternative power source can be used even when the appliance is switched off, and also when unplugged.

For example, one appliance may be used to charge a battery while the appliance is plugged in to the mains power outlet (i.e. has mains power available) but is not actually using the mains power to carry out the usual functions of that appliance. For example, food processing appliances are generally kept plugged into the mains power outlet even when not in use. Therefore, the removable battery may be charged by the food processing appliance in readiness for use by a different appliance. For example, where the different appliance is a different type of appliance such as a kettle, when the user requires the water in the kettle to be heated up more quickly than with a standard mains power only heating cycle, the removable battery may be removed from the first appliance (e.g. food processor) and attached to the second appliance (e.g. kettle) to reduce the heating cycle time.

That battery may then be moved to another appliance, where the other appliance is either the same type of appliance or a different type of appliance, so that the other appliance is able to utilise the battery power.

According to an example, the controller may determine the water level in a kettle (or sous-vide device) based on a sensed water level detected by a water sensor and determine one or more functions to be performed in response to the sensed water level, the state of charge of the backup power supply and the state of health of the backup power supply.

The herein described energy management system may adapt to an aged battery to reduce the amount of power drawn from a backup power supply when the energy management system controller has determined that the backup power supply (e.g. battery) life is being reduced at a rate above a defined threshold.

According to another example, where the appliance is a pizza oven, the pizza oven can be cooled down by the function of a cooling fan operating using the power from the battery. This can occur even if the mains power is switched off at the power outlet and also if the mains power is completely unplugged from the outlet. Therefore, the pizza oven can still be cooled down and so provide sufficient cooling without the use of mains power. A temperature sensor, for example an NTC, can provide temperature feedback to the microcontroller to enable the microcontroller to determine whether the temperature of the pizza oven has dropped below a predetermined temperature. Upon determining that the temperature has dropped below the predetermined temperature, the microcontroller can remove the power provided to the function of the cooling fan. Further, other features may also be activated as an alternative to, or as well as, the cooling fan. For example, a lighting function may be activated where the light is powered by the battery. As a further example, a door locking function may be activated where the lock is powered by the battery.

According to a further example, an appliance in the form of a kitchen device, such as a sous-vide device may utilise one or more of the herein described processes to control functions on the sous-vide device when a cycle interruption has occurred. For example, the battery power may be used to perform (e.g. execute, initiate, start or control) a function of the sous-vide device. According to one example, the battery power may be used to perform the function of maintaining the water temperature of the sous-vide device. According to another example, the battery power may be used to perform the function of maintaining the water flow of the sous-vide device. Other examples are also envisaged.

As a further example, an appliance in the form of an espresso machine may utilise one or more of the herein described processes to control functions on the espresso machine during operation of the espresso machine. For example, power from the backup power source may be used to enable multiple functions to be performed (e.g. executed, initiated, started or controlled) at the same time, where those functions could not be performed simultaneously with mains power only as there would not be enough power available. One example would be providing heated water or steam through one group head of the espresso machine while at the same time producing an espresso through another group head of the espresso machine. Other examples are also envisaged.

Some appliances may have the mains chord detachable so that when the appliance is using the backup power source, the detachable mains cord can be removed so that the appliance can be used chord free. This may be particularly useful for an appliance such as a stick mixer, for example.

### Industrial Applicability

The arrangements described are applicable to the kitchen appliance industries.

The foregoing describes only some embodiments of the present invention, and modifications and/or changes can be made thereto without departing from the scope and spirit of the invention, the embodiments being illustrative and not restrictive.

In the context of this specification, the word "comprising" means "including principally but not necessarily solely" or "having" or "including", and not "consisting only of". Variations of the word "comprising", such as "comprise" and "comprises" have correspondingly varied meanings.

## Claims

1. An energy management system (401) for a kitchen appliance, the energy management system (401) comprising:
a mains power system (403),
a backup energy storage system (405), and
at least one controller (411),
wherein the controller (411) is arranged to:
determine a state of health of the energy storage system (401);
determine a state of charge of the energy storage system (401);
determine how energy from the energy storage system (401) is to be used based on the determined state of health, the determined state of charge and at least one measured variable obtained from the kitchen appliance, and
apply the energy to operate at least one function of the kitchen appliance,
wherein the energy storage system (405) comprises at least one battery (407), and the controller (411) is further arranged to determine the state of charge based on a measured battery current and an estimated open circuit battery voltage, and
wherein the controller (411) is further arranged to determine the estimated open circuit battery voltage based on the battery temperature and the battery voltage.

2. The energy management system (401) of claim 1, wherein the controller (411) is arranged to determine one or more of the following, in any combination, i) whether to use the energy from the energy storage system (405) or not, ii) how much energy to use from the energy storage system (405), iii) how long to use the energy storage system (405) for, and iv) which of the at least one function of the kitchen appliance can be performed using energy from the energy storage system (405).

3. The energy management system (401) of claim 1 or 2, wherein the controller (411) is further arranged to determine a discharge power limit of the energy storage system (405) based on the determined state of charge and determine how energy from the energy storage system (405) is to be used based on the determined state of health, the determined discharge power limit and the least one measured variable obtained from the kitchen appliance.

4. The energy management system (401) of any one of the preceding claims, wherein the controller (411) is further arranged to determine how many power cycles of the battery (407) there are based on the determined discharge power limit, and indicate the determined number of power cycles.

5. The energy management system (401) of any one of the preceding claims, wherein the controller (411) is further arranged to determine the state of health based on an internal resistance of the battery (407), an operating temperature of the battery (407) and a lifetime capacity of the battery (407).

6. The energy management system (401) of any one of the preceding claims, wherein the controller (411) is an energy storage system controller arranged to determine how the energy from the battery (407) is to be used based on the determined state of health, the determined state of charge and at least one function being or to be performed by the kitchen appliance.

7. The energy management system (401) of claim 6, wherein the energy storage system controller and the battery (407) are in a self-contained unit and the self-contained unit is removably attached to the kitchen appliance.

8. The energy management system (401) of claim 1, wherein the energy storage system (405) comprises one or more of a capacitor, a capacitor bank, a super capacitor, a super capacitor bank, or a battery.

9. A kitchen appliance comprising the energy management system (401) of any one of claims 1 to 8.

10. A computer readable medium having recorded thereon a computer program for controlling an energy management system (401) for a kitchen appliance as claimed in any one of claims 1 to 8.

## Patentansprüche

1. Energieverwaltungssystem (401) für ein Küchengerät, wobei das Energieverwaltungssystem (401) Folgendes umfasst:
ein Netzstromversorgungssystem (403),
ein Backup-Energiespeichersystem (405), und
mindestens eine Steuerung (411),
wobei die Steuerung (411) angeordnet ist, um einen Gesundheitszustand des Energiespeichersystems (401) zu ermitteln;
einen Ladezustand des Energiespeichersystems (401) zu ermitteln;
zu ermitteln, wie die Energie aus dem Energiespeichersystem (401) genutzt werden soll, basierend auf dem ermittelten Gesundheitszustand, dem ermittelten Ladezustand und zumindest einer vom Küchengerät gewonnenen gemessenen Variablen, und
die Energie so anzuwenden, dass mindestens eine Funktion des Küchengeräts betrieben wird,
wobei das Energiespeichersystem (405) mindestens eine Batterie (407) umfasst und die Steuerung (411) zudem angeordnet ist, um den Ladezustand basierend auf einem gemessenen Batteriestrom und einer geschätzten Batteriespannung bei unterbrochenem Stromkreis zu ermitteln, und
wobei die Steuerung (411) zudem angeordnet ist, um die geschätzte Batteriespannung bei unterbrochenem Stromkreis basierend auf der Batterietemperatur und der Batteriespannung zu ermitteln.

2. Energieverwaltungssystem (401) nach Anspruch 1, wobei die Steuerung (411) angeordnet ist, um eine oder mehrere der folgenden Angaben in irgendeiner Kombination zu ermitteln: i) ob die Energie aus dem Energiespeichersystem (405) genutzt werden soll oder nicht, ii) wie viel Energie aus dem Energiespeichersystem (405) genutzt werden soll, iii) wie lang das Energiespeichersystem (405) genutzt werden soll und iv) welche der mindestens einen Funktion des Küchengeräts durch die Nutzung von Energie aus dem Energiespeichersystem (405) durchgeführt werden kann.

3. Energieverwaltungssystem (401) nach Anspruch 1 oder 2, wobei die Steuerung (411) zudem angeordnet ist, um eine Entladestromgrenze des Energiespeichersystems (405) basierend auf dem ermittelten Ladezustand zu ermitteln, und zu ermitteln, wie die Energie aus dem Energiespeichersystem (405) genutzt werden soll, basierend auf dem ermittelten Gesundheitszustand, der ermittelten Entladestromgrenze und der mindestens einen, vom Küchengerät gewonnenen gemessenen Variablen.

4. Energieverwaltungssystem (401) nach einem der vorhergehenden Ansprüche, wobei die Steuerung (411) zudem angeordnet ist, um zu ermitteln, wie viele Stromzyklen der Batterie (407) basierend auf der ermittelten Entladestromgrenze vorliegen, und die ermittelte Anzahl an Stromzyklen anzugeben.

5. Energieverwaltungssystem (401) nach einem der vorhergehenden Ansprüche, wobei die Steuerung (411) zudem angeordnet ist, um den Gesundheitszustand basierend auf einem internen Widerstand der Batterie (407), einer Betriebstemperatur der Batterie (407) und einer Lebensdauerkapazität der Batterie (407) zu ermitteln.

6. Energieverwaltungssystem (401) nach einem der vorhergehenden Ansprüche, wobei die Steuerung (411) eine Energiespeichersystemsteuerung ist, die angeordnet ist, um zu ermitteln, wie die Energie aus der Batterie (407) genutzt werden soll, basierend auf dem ermittelten Gesundheitszustand, dem ermittelten Ladezustand und zumindest einer Funktion, die vom Küchengerät durchgeführt wird oder durchzuführen ist.

7. Energieverwaltungssystem (401) nach Anspruch 6, wobei sich die Energiespeichersystemsteuerung und die Batterie (407) in einer eigenständigen Einheit befinden und die eigenständige Einheit entfernbar am Küchengerät angebracht ist.

8. Energieverwaltungssystem (401) nach Anspruch 1, wobei das Energiespeichersystem (405) einen Kondensator und/oder eine Kondensatorbank und/oder einen Superkondensator und/oder eine Superkondensatorbank und/oder eine Batterie umfasst.

9. Küchengerät, umfassend das Energieverwaltungssystem (401) nach einem der Ansprüche 1 bis 8.

10. Computerlesbares Medium, aufweisend darauf aufgezeichnet ein Computerprogramm zum Steuern eines Energieverwaltungssystems (401) für ein Küchengerät nach einem der Ansprüche 1 bis 8.

## Revendications

1. Système de gestion d'énergie (401) pour un appareil de cuisine, le système de gestion d'énergie (401) comprenant :
un système d'alimentation secteur (403),
un système de stockage d'énergie de secours (405), et
au moins un contrôleur (411),
dans lequel le contrôleur (411) est agencé pour :
déterminer un état de santé du système de stockage d'énergie (401) ;
déterminer un état de charge du système de stockage d'énergie (401) ;
déterminer comment l'énergie provenant du système de stockage d'énergie (401) doit être utilisée sur la base de l'état de santé déterminé, de l'état de charge déterminé et d'au moins une variable mesurée obtenue à partir de l'appareil de cuisine, et
appliquer l'énergie pour faire fonctionner au moins une fonction de l'appareil de cuisine,
où le système de stockage d'énergie (405) comprend au moins une batterie (407), et le contrôleur (411) est en outre agencé pour déterminer l'état de charge sur la base d'un courant de batterie mesuré et d'une tension de batterie en circuit ouvert estimée, et
dans lequel le contrôleur (411) est en outre agencé pour déterminer la tension de batterie en circuit ouvert estimée sur la base de la température de batterie et de la tension de batterie.

2. Système de gestion d'énergie (401) selon la revendication 1, dans lequel le contrôleur (411) est agencé pour déterminer un ou plusieurs des éléments suivants, dans toute combinaison, i) s'il faut utiliser l'énergie provenant du système de stockage d'énergie (405) ou non, ii) combien d'énergie utiliser provenant du système de stockage d'énergie (405), iii) pendant combien de temps utiliser le système de stockage d'énergie (405), et iv) laquelle de l'au moins une fonction de l'appareil de cuisine peut être réalisée en utilisant l'énergie provenant du système de stockage d'énergie (405).

3. Système de gestion d'énergie (401) selon la revendication 1 ou 2, dans lequel le contrôleur (411) est en outre agencé pour déterminer une limite de puissance de décharge du système de stockage d'énergie (405) sur la base de l'état de charge déterminé et déterminer comment l'énergie provenant du système de stockage d'énergie (405) doit être utilisée sur la base de l'état de santé déterminé, de la limite de puissance de décharge déterminée et de l'au moins une variable mesurée obtenue à partir de l'appareil de cuisine.

4. Système de gestion d'énergie (401) selon l'une quelconque des revendications précédentes, dans lequel le contrôleur (411) est en outre agencé pour déterminer combien de cycles de puissance de la batterie (407) il y a sur la base de la limite de puissance de décharge déterminée, et indiquer le nombre déterminé de cycles de puissance.

5. Système de gestion d'énergie (401) selon l'une quelconque des revendications précédentes, dans lequel le contrôleur (411) est en outre agencé pour déterminer l'état de santé sur la base d'une résistance interne de la batterie (407), d'une température de fonctionnement de la batterie (407) et d'une capacité de durée de vie de la batterie (407).

6. Système de gestion d'énergie (401) selon l'une quelconque des revendications précédentes, dans lequel le contrôleur (411) est un contrôleur de système de stockage d'énergie agencé pour déterminer comment l'énergie provenant de la batterie (407) doit être utilisée sur la base de l'état de santé déterminé, l'état de charge déterminé et au moins une fonction étant ou devant être effectuée par l'appareil de cuisine.

7. Système de gestion d'énergie (401) selon la revendication 6, dans lequel le contrôleur de système de stockage d'énergie et la batterie (407) sont dans une unité autonome et l'unité autonome est fixée de manière amovible à l'appareil de cuisine.

8. Système de gestion d'énergie (401) selon la revendication 1, dans lequel le système de stockage d'énergie (405) comprend un ou plusieurs d'un condensateur, une batterie de condensateurs, un super condensateur, une batterie de super condensateurs ou une batterie.

9. Appareil de cuisine comprenant le système de gestion d'énergie (401) selon l'une quelconque des revendications 1 à 8.

10. Support lisible par ordinateur sur lequel est enregistré un programme informatique pour commander un système de gestion d'énergie (401) pour un appareil de cuisine selon l'une quelconque des revendications 1 à 8.
